Europäisches Patentamt

European Patent Office

Office européen des brevets

(19)

(11) Veröffentlichungsnummer: **0 171 014**
**B1**

(12) EUROPÄISCHE PATENTSCHRIFT

(45) Veröffentlichungstag der Patentschrift:
08.02.89

(51) Int. Cl.⁴: **F 01 K 17/02**, F 24 D 11/00

(21) Anmeldenummer: 85109527.3

(22) Anmeldetag: 29.07.85

(54) Verfahren und Schaltungsanordnung zur Erhöhung des Wirkungsgrades eines Kraftwerks, basierend auf dem Wärmespeichervermögen der Fernheizsysteme.

(30) Priorität: 01.08.84 HU 293584

(43) Veröffentlichungstag der Anmeldung:
12.02.86 Patentblatt 86/7

(45) Bekanntmachung des Hinweises auf die Patenterteilung:
08.02.89 Patentblatt 89/6

(84) Benannte Vertragsstaaten:
AT BE CH DE FR GB IT LI LU NL SE

(56) Entgegenhaltungen:
WO-A-82/02245
DE-A- 1 426 908
DE-B- 1 214 701
FR-A- 1 375 643
US-A- 3 890 787

(73) Patentinhaber: ENERGIAGAZDALKODASI INTEZET,
33-34, Bem-rakpart, H-1027 Budapest II (HU)

(72) Erfinder: Halzl, Jozsef, Dipl.-Ing., Garas u. 12,
H-1026 Budapest (HU)
Erfinder: Papp, Istvan, Dipl.-Ing., Ady Endre ut. 4,
H-1024 Budapest (HU)
Erfinder: Torma, Miklos, Dipl.-Ing., Kaplar u. 11,
H-1024 Budapest (HU)

(74) Vertreter: Patentanwälte Vierling & Jentschura,
Steinsdorfstrasse 6, D-8000 München 22 (DE)

Beschreibung

Die Erfindung betrifft ein Verfahren zur Erhöhung des Wirkungsgrades eines mit Warmwasser aus einem Heizkraftwerk betriebenen Fernwärmesystems, bei welchem das Wärmespeichervermögen des Fernwärmesystems derart ausgenutzt wird, dass die Wärmezufuhr zu den Warmwasserspeicher enthaltenden Verbraucher-Wärmezentralen unter Ausnutzung der in der Spitzenverbrauchsperiode der elektrischen Energieerzeugung in den Abendstunden gewinnbaren maximalen Wärmeleistung in unterschiedlichen Tageszeiträumen in unterschiedlichen Wärmestufen erfolgt, wobei die Summe der in den Tageszeiträumen zugeführten Wärmemengen gleich dem aufgrund der jeweiligen Aussentemperatur geschätzten täglichen Wärmebedarf ist. Die Erfindung betrifft auch ein Fernwärmesystem zur Verwirklichung des Verfahrens.

Das Verfahren gemäss der vorliegenden Anmeldung ist im wesentlichen eine Weiterentwicklung der ungarischen Patentanmeldung, die am 28. April 1980 unter der Anmeldenummer 1044/80 beim ungarischen Patentamt angemeldet wurde und auf welche am 14. März 1984 ein Patent erteilt wurde. Der Titel dieses Patentes lautet: «Verfahren zum energiesparamen Betrieb für funktionierende Fernheizsysteme, basiert auf das Wärmespeicherungsvermögen der Fernheizsysteme».

Das Wesentliche des Verfahrens nach diesem ungarischen Patent 1044/80 liegt darin, dass die Wärmeregulierung zur Einspeisung der täglich benötigten Wärmemenge, die aufgrund der durchschnittlichen Aussentemperatur prognostiziert wird, unter Ausnutzung des Wärmespeicherungsvermögens der Fernheizsysteme derart durchgeführt wird, dass an Stelle von Steigstrangwasser mit konstanter Temperatur die Temperatur des gelieferten Warmwassers in unterschiedlichen Wärmestufen so geregelt wird, dass die Summe der zu verschiedenen Tageszeiten gelieferten Wärme, bezogen auf einen Tag, mit dem Wert der prognostizierten benötigten Wärme, bezogen auf die prognostizierte Aussentemperatur, übereinstimmt. Der Temperaturunterschied des Steigstrangwassers und des Rücklaufwassers wird beim Heizkraftwerk gemessen. Der Betrag der eingespeisten Wärme, d. h. die Wärmestufe, wird so berechnet, dass die gelieferte Wärmemenge tagsüber höher und nachts niedriger ist und dass der Umstand ausgenutzt werden kann, dass – unter Berücksichtigung der technischen Möglichkeit, aus elektrischer Energie Warmwasser zu gewinnen –, die Spitze der Warmwassererzeugung und die Spitze der elektrischen Energieerzeugung beinahe zur gleichen Zeit auftreten bzw. die Spitze der Warmwassererzeugung gegenüber dem maximalen elektrischen Energieverbrauch zeitlich nur geringfügig versetzt ist.

Im Falle der Verwendung des Verfahrens gemäss dem ungarischen Patent 1044/80 kann man bei Heizkraftwerken vom Gegendrucksystem in den Nachtstunden unter Ausnutzung der Wärmekapazität der Fernleitungen eine verminderte Wärmeabgabe erreichen, wodurch die Abnahme des spezifischen Wärmeverbrauches des gesamten Systems im Laufe von 24 Stunden ohne Beeinträchtigung einer ständigen Warmwasserversorgung erreicht wird. Diese Möglichkeit wird dadurch gegeben, dass als Ergebnis der in den Abendstunden, d. h. zur Zeit der elektrischen Spitzenenergieerzeugung, vorgenommenen vermehrten Wärmeaufnahme die Warmwasserspeicheranlagen in den Wohnhäusern mit Warmwasser von solcher Temperatur aufgefüllt werden, dass bei dem verminderten Wärmebedarf in den Nachtstunden eine Deckung dieses geringen Wärmebedarfs erreicht wird.

Aufgrund von prinzipiellen Überlegungen und durch Untersuchungen wurde festgestellt, dass die Effektivität des Verfahrens gemäss dem ungarischen Patent 1044/80 erhöht wird, indem in den Nachtstunden, vorteilhaft zwischen 23 – 05 Uhr, die Wärmelieferung bzw. der Betrieb der Hauptkreislaufpumpe im Heizkraftwerk ganz stillgelegt wird, und gleichzeitig für diese Zeit in den Verbraucher-Wärmezentralen mit Hilfe einer programmierbaren Schaltuhr oder mit einem anderen Mittel, z. B. mit einem Servo-Regler, der mit einem Primärkreis-Strömungsmesser gesteuert wird, oder mit einem handbetätigten Schalter die in den Verbraucher-Wärmezentralen angeordneten Sekundärkreis-Warmwasser- und Heizungsstromkreispumpen abgestellt und die in dem Sekundärkreis befindlichen schliessbaren Ventile entsprechend der gewünschten Betriebsart geöffnet bzw. geschlossen werden.

Gemäss unseren Betriebserfahrungen können die in den Verbraucher-Wärmezentralen angeordneten Warmwasserspeicher vor dem Abstellen der Warmwasserversorgung durch das Heizkraftwerk in der Zeit der maximalen elektrischen Energieherstellung mit Warmwasser höherer Temperatur bis ca. 60 °C aufgefüllt werden. Dieses Warmwasser kann bei geringerem Warmwasserbedarf in der Zeit der Warmwasserspeisung von dem Heizkraftwerk mehrere Stunden lang, also ganz bis in die Morgenstunden, entsprechend der Normvorschrift für die Warmwasserversorgung, die vorgeschriebene Warmwassertemperatur von 40 °C sicherstellen, und dabei kann dieses Wasser falls nötig auch bei geringerem Heizbedarf in den Nachtstunden die zur Nachtheizung erforderliche Warmwasserversorgung decken.

Falls die Heizung in den Nachtstunden völlig abgestellt werden kann, so kann die in dem Warmwasserspeicher gespeicherte Wärme zur Deckung des Nutzwarmwasserbedarfs verwendet werden. Dies kann so erreicht werden, dass bei Abstellen der Hauptspeisepumpe in dem Heizkraftwerk sowohl die Kreislaufpumpen der Warmwasserspeicher in den Verbraucher-Wärmezentralen als auch die Kreislaufpumpen der Nutzwarmwasserkreise im Gebäude abgestellt werden. Durch diese Massnahme kann der Bedarf an Nutzwarmwasser auch in den Nachtstunden gedeckt werden, wobei für die Beheizung der Wohnungen eine Wärmeübergabe weder vom Primärfernheizungskreis noch vom Nutzwarmwasserkreis vorgenommen wird.

Sollte nach Abstellen der Hauptkreislaufpumpe im Heizkraftwerk im Gebäude nur ein geringer Heizbedarf bestehen, so wird entsprechend dem Verfahren gemäss der Erfindung ein Anteil des in den Warmwasserspeichern der Verbraucher-Wärmezentralen gespeicherten Wassers über einen Heizungswärmetauscher für die Heizung der Wohnungen benutzt. Diese Möglichkeit kann durch verschiedene Schaltungsvarianten realisiert werden. Als Beispiel erwähnen wir die folgende:

Die Primärleitungen der Verbraucher-Wärmezentralen werden mit einer Kreislaufpumpe ergänzt, wodurch ein innerer Zirkulationskreis ausgebildet ist, der ermöglicht, dass ein Teil der im Warmwasserspeicher gespeicherten Wärme unter kontinuierlichem Betrieb der Warmwasserkreislaufpumpe über einen zusätzlichen Wärmetauscher die Heizkörper zwecks Ersetzung der abgestrahlten Wärme mit warmem Wasser vom Warmwasserspeicher versorgt.

Durch die Erfindung wird die Aufgabe gelöst, ein die Merkmale aus dem einleitenden Teil des Anspruchs 1 aufweisendes Verfahren und ein dieses verwirklichendes Fernwärmesystem zu schaffen, bei denen die Einsparung noch grösser ist.

Dies wird erfindungsgemäss dadurch erreicht, dass die Warmwasserspeicher während der Spitzenverbrauchsperiode auf die zulässige Maximaltemperatur aufgewärmt werden und dass bei einem geringen Wärmebedarf in den Nachtstunden, vorzugsweise zwischen 23 und 05 Uhr, die Warmwasserzufuhr in das Fernwärmesystem durch Stillsetzung der Hauptkreislaufpumpe im Heizkraftwerk abgestellt wird und gleichzeitig die zur Nutzwarmwasserversorgung erforderliche Wärmemenge und/oder die von Heizkörpern in den Heizungsverbrauchskreisen abgestrahlte Wärmemenge aus den aufgewärmten Wärmespeichern gewonnen werden.

Falls in den Nachtstunden die Heizung völlig abgestellt sein darf, jedoch die Nutzwarmwasserversorgung aus dem Warmwasserspeicher aufrechterhalten werden soll, werden gemäss einer Ausführungsform des erfindungsgemässen Verfahrens in den Verbraucher-Wärmezentralen in den Nachtstunden sowohl die Kreislaufpumpen der Heizungsverbrauchskreise wie auch die Kreislaufpumpen der Nutzwarmwasserkreise abgestellt.

Falls in den Nachtstunden ein geringerer Wärmebedarf für die Heizung besteht, wird gemäss einer weiteren Ausführungsform des erfindungsgemässen Verfahrens ein Anteil der in dem Warmwasserspeicher gespeicherten Wärme über den eine erste Kreislaufpumpe enthaltenden Nutzwarmwasserkreis und Wärmetauscher, die in diesen und in einen eine zweite Kreislaufpumpe enthaltenden, in der Verbraucherwärmezentrale vorgesehenen Wasserzirkulationskreis eingeschaltet sind, von dem Wasserzirkulationskreis übernommen und über einen anderen Wärmetauscher, der in den Wasserzirkulationskreis und in den Heizungsverbraucherkreis übergeben, wobei sowohl mit der Kreislaufpumpe des Nutzwarmwasserkreises als auch mit der Kreislaufpumpe des Heizungsverbrauchskreises die Wasserzirkulation in diesen Kreisen aufrechterhalten wird.

Gemäss einer weiteren Ausführungsform des erfindungsgemässen Verfahrens wird die Zirkulation des Warmwassers sowohl im Nutzwarmwasserkreis als auch im Heizungsverbrauchskreis von den zugehörigen Kreislaufpumpen aufrechterhalten und über einen zusätzlichen Wärmetauscher ein unmittelbarer Wärmeaustausch zwischen diesen beiden Kreisen durchgeführt.

Ferner kann das Wasser des Warmwasserspeichers über einen elektrischen Heizkörper, der in diesem Warmwasserspeicher eingebaut ist, im Falle eines erhöhten Nachtheizungs-/oder Nutzwarmwasserversorgungsbedarf zusätzlich beheizt werden, wodurch die Warmwasserspeicher unabhängig von den Betriebszuständen des Heizkraftwerkes aufgeheizt werden können.

Die in der Verbraucher-Wärmezentrale befindlichen Ventile und Kreislaufpumpen können von einer Schaltuhr oder von einem Schaltgerät gesteuert werden, die von einem im Primärkreis des Fernwärmesystems eingebauten Wasserströmungsfühler gesteuert werden.

Das erfindungsgemässe Fernwärmesystem zur Verwirklichung des erfindungsgemässen Verfahrens ist versehen mit einem Heizkraftwerk, das mit einem Kessel, einer Dampfturbine und einem primärseitig in den Abdampfkreis der Dampfturbine eingeschalteten Wärmetauscher ausgestattet ist, der sekundärseitig in einen Speisewasserkreis einer Verbraucher-Wärmezentrale eingeschaltet ist, wobei in den Speisewasserkreis eine Hauptkreislaufpumpe und in der mit Hauptwärmetauschern der Verbraucher-Wärmezentrale verbundenen Vorlaufleitung und Rücklaufleitung Ventile eingeschaltet sind und wobei ein Teil der Hauptwärmetauscher sekundärseitig in einen Nutzwarmwasserkreis, der einen Warmwasserspeicher und eine Kreislaufpumpe enthält, und ein anderer Teil dieser Hauptwärmetauscher in einen Heizungsverbrauchskreis eingeschaltet sind, der ebenfalls eine Kreislaufpumpe enthält.

Gemäss der Erfindung sind bei diesem Fernwärmesystem sowohl die Kreislaufpumpe des Nutzwarmwasserkreises als auch die Kreislaufpumpe des Heizungsverbrauchskreises mit je einem Schaltgerät ausgerüstet, wobei die Elemente des Nutzwarmwasserkreises und des Heizungsverbrauchskreises so ausgelegt sind, dass sie während der nächtlichen Stillegung der Fernwärmezufuhr die Nutzwasserversorgung und Heizung gewährleisten.

Gemäss einer Ausführungsform des erfindungsgemässen Fernwärmesystems sind die Ventile in der Vorlaufleitung und der Rücklaufleitung des Speisewasserkreises mit ihren mit denjenigen Hauptwärmetauschern, die sekundärseitig in den Nutzwarmwasserkreis eingeschaltet sind, verbundenen Enden auch unmittelbar miteinander verbunden, und zwischen dem Ventil der Vorlaufleitung und dem mit diesem verbundenen Hauptwärmetauscher, der an den Vorlauf des Warmwasserspeichers angeschlossen ist, ist eine weitere Kreislaufpumpe, die mit einem Schaltgerät versehen ist, eingeschaltet.

Gemäss einer anderen Ausführungsform des erfindungsgemässen Fernwärmesystems ist zwischen dem Hauptwärmetauscher im Heizungsverbrauchskreis der Verbraucher-Wärmezentrale und der Kreislaufpumpe des Heizungsverbrauchskreises ein erstes Ventil angeordnet und ist die Leitung zwischen der Kreislaufpumpe des Heizungsverbrauchskreises und dem ersten Ventil über die Primärseite eines weiteren Wärmetauschers an den Heizkörper des Heizungsverbrauchskreises angeschlossen, wobei die Sekundärseite dieses weiteren Wärmetauschers einerseits über ein zweites Ventil die Sekundärseite desjenigen Hauptwärmetauschers, der dem Warmwasserspeicher vorgeschaltet ist, und andererseits über ein drittes Ventil an die Sekundärseite desjenigen Hauptwärmetauschers angeschlossen ist, an welchen die Rücklaufleitung des Speisewasserkreises angeschlossen ist, wobei die Sekundärseite dieses letzten Hauptwärmetauschers andererseits über ein viertes Ventil an den Ausgang der Kreislaufpumpe des Nutzwarmwasserkreises angeschlossen ist.

Gemäss einer weiteren vorteilhaften Ausführungsform des erfindungsgemässen Fernwärmesystems ist der Warmwasserspeicher mit einem elektrischen Heizkörper versehen, der mit einem Schaltgerät ausgerüstet ist.

Die Ventile bzw. die Pumpen der Verbraucher-Wärmezentrale können von an sich bekannten Zeitschaltuhr-Schaltorganen gesteuert werden. Es ist auch möglich, die Schaltorgane der Ventile bzw. Kreislaufpumpen der Verbraucher-Wärmezentrale über einen Servomechanismus von einem an sich bekannten Wasserströmungsfühler, z. B. in Schaufelrad-Ausbildung, zu steuern.

Die wichtigsten Vorteile des Verfahrens und der zur Realisierung des Verfahrens gestalteten Schaltungsanordnung sind die folgenden:

- Die Wärmeeinspeisung des Fernheizsystems kann weiter gesenkt werden. Durch Einstellen der Warmwasserabgabe in den Nachtstunden kann nämlich eine beträchtliche Einsparung an Heizmitteln im Heizkraftwerk erzielt werden und des weiteren der Wärmeverlust im Fernwärmesystem zwischen dem Heizkraftwerk und der Verbraucher-Wärmezentrale bzw. den Wohnungen bedeutend reduziert werden. Durch die erwähnten Massnahmen wird eine intensive Nachtheizung und Warmwasserversorgung im Rahmen der Vorschriften bzw. der Heiz- und Warmwasserversorgungsnormen realisiert.

- Die notwendige Energie für den Betrieb der im Fernwärmesystem angeordneten Kreislaufpumpen kann bedeutend verringert werden, wodurch eine weitere beträchtliche Einsparung an Heizmitteln erzielt werden kann. Die Abnahme des Kreislaufpumpenbetriebes kann dadurch erreicht werden, dass, falls die Heizung in den Nachtstunden nicht erforderlich ist, nach Einstellen der Hauptkreislaufpumpe im Heizkraftwerk in den Verbraucher-Wärmezentralen die Kreislaufpumpen der Nutzwarmwasserzirkulation und die Kreislaufpumpen der Heizkörper ebenfalls abgestellt werden können, vorausgesetzt, dass in den Nachtstunden kein Bedarf an Heizung besteht.

- Falls in den Verbraucher-Wärmezentralen bzw. in deren primärseitigem Kreislauf ein innerer Zirkulationskreis vorhanden ist und die Wärme von dem Warmwasserspeicher in den Warmwasserkreis übernommen wird, so kann die Zirkulation des Warmwasserkreises durch bedeutend weniger Energieaufwand erreicht werden. Ausserdem bietet der Umstand, dass der Warmwasserspeicher mit einem elektrischen Heizkörper ausgerüstet wurde, einen bedeutenden Vorteil. Falls in den Nachtstunden ein Heizen erforderlich ist, kann dann nämlich ein Teil der für dieses Heizen erforderlichen Energie vom elektrischen Netz entnommen werden, wodurch eine Einsparung an Kohlenwasserstoff im Heizkraftwerk erreicht wird.

- Das Ausrüsten des Warmwasserspeichers mit einem elektrischen Heizkörper bietet den weiteren Vorteil, dass ausserhalb der zentralen Heizungsperiode neben der Warmwasserversorgung auch noch ein geringfügiges Heizen möglich ist, falls dies notwendig ist. Dieser Vorteil ist ausserdem dann äusserst nützlich, wenn die Warmwasserversorgung vom Heizkraftwerk aus irgendeinem Grund ausgefallen ist.

- Vorteilhaft ist es, in der Verbraucher-Wärmezentrale im primärseitigen Wasserkreis einen Strömungsfühler, z.B. einen Schaufelradfühler vorzusehen, der zur entsprechenden Steuerung der Pumpen und Ventile in der Verbraucher-Wärmezentrale diese Steuerung nach einem vorgegebenen Programm erfüllen kann. Durch diese Massnahme kann gesichert werden, dass, wenn die Hauptkreislaufpumpe im Heizkraftwerk abgestellt wird und die Primärwasserkreisströmung unterbrochen ist, die Schaltorgane der Verbraucher-Wärmezentralen automatisch auf Nachtprogramm umgestellt werden, und umgekehrt nach Inbetriebnahme der Hauptkreislaufpumpe im Heizkraftwerk in den Morgenstunden in den Verbraucher-Wärmezentralen die Ventile und Kreislaufpumpen dem ursprünglichen Programm entsprechend umgeschaltet werden.

Das Verfahren gemäss der Erfindung bzw. die Schaltungsanordnung zur Realisierung derselben wird durch Ausführungsbeispiele anhand der Zeichnung näher erläutert, wobei

Fig. 1 die gemäss dem ungarischen Patent 1044/80 dargestellte Kurve des elektrischen Stromverbrauchs im Landes-Verteilungsnetz innerhalb eines Tages veranschaulicht,

Fig. 2 ebenfalls gemäss dem ungarischen Patent 1044/80 die Heizleistung zeigt, die vom Heizkraftwerk im Verlauf eines Tages abgegeben wird,

Fig. 3 die Schaltungsanordnung der Leitungen zwischen dem Heizkraftwerk und den Verbraucher-Wärmezentralen der Gebäude zeigt, wobei den Speisewasser- und Warmwasserkreislaufpumpen der an sich bekannten Wohnhaus-Schaltungsanordnung ergänzende Schalter zugeordnet sind,

Fig. 4 eine Schaltungsanordnung für mögliche Ausführungsform des erfindungsgemässen Verfahrens zeigt, und

Fig. 5 eine weitere Schaltungsanordnung zur Realisierung des erfindungsgemässen Verfahrens zeigt.

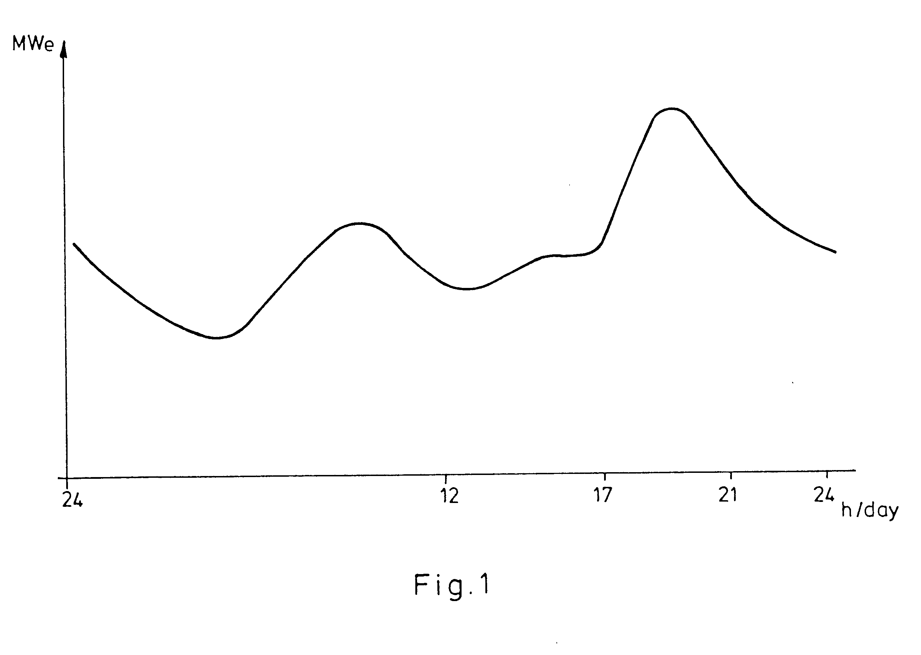

Wie schon erwähnt, zeigt Fig. 1 die abgegebene elektrische Leistung des elektrischen Verteilungsnetzes des Landes, wobei der Kurvenverlauf die Verteilung dieser Leistung auf die 24 Stunden des Tages veranschaulicht. Entlang der horizontalen Achse sind die Stunden 0 – 24 des Tages aufgetragen, entlang der vertikalen Achse ist die Leistungsabgabe des elektrischen Verteilungsnetzes in MW-Einheiten aufgetragen. Aufgrund des in Fig. 1 veranschaulichten Kurvenverlaufes kann als wichtiges Ergebnis festgestellt werden, dass die Spitzenwerte der elektrischen Energie zwischen 17 – 21 Uhr abgegeben werden.

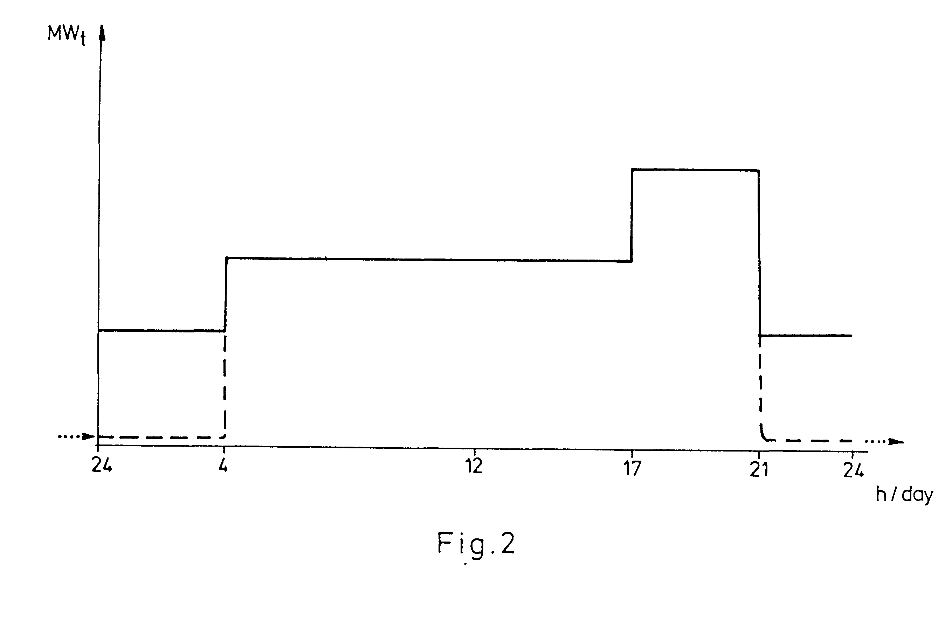

In Fig. 2 ist der Kurvenverlauf der durchschnittlichen Warmwasserabgabe im Sinne des ungarischen Patentes 1044/80 veranschaulicht. Durch Vergleichen der Kurven gemäss Fig. 1 und Fig. 2 ist erkennbar, dass im Verlauf der elektrischen Stromerzeugung die in den Heizkraftwerken entstandene maximale Wärmemenge ebenfalls in der Zeit zwischen 17 – 21 Uhr zur Verfügung steht und dass in dieser Zeit die maximale Warmwassermenge für die Verbraucher erzeugt bzw. abgegeben wird.

In Fig. 2 ist mit gestrichelter Linie die Abweichung der Warmwasserabgabe vom Heizkraftwerk gezeigt, die gemäss der Erfindung gegenüber der Warmwasserabgabe gemäss dem ungarischen Patent 1044/80 erreicht wird. Wie aus Fig. 2 ersichtlich ist, wird im als Beispiel genommenen Fall um 21 Uhr, d. h. nach Ende der Spitzenbelastung, die Speisepumpe 5 im Heizkraftwerk abgestellt, wodurch in den gut isolierten Wasserleitungen in Richtung der Verbraucher-Wärmezentralen keine Warmwasserströmung vorhanden ist.

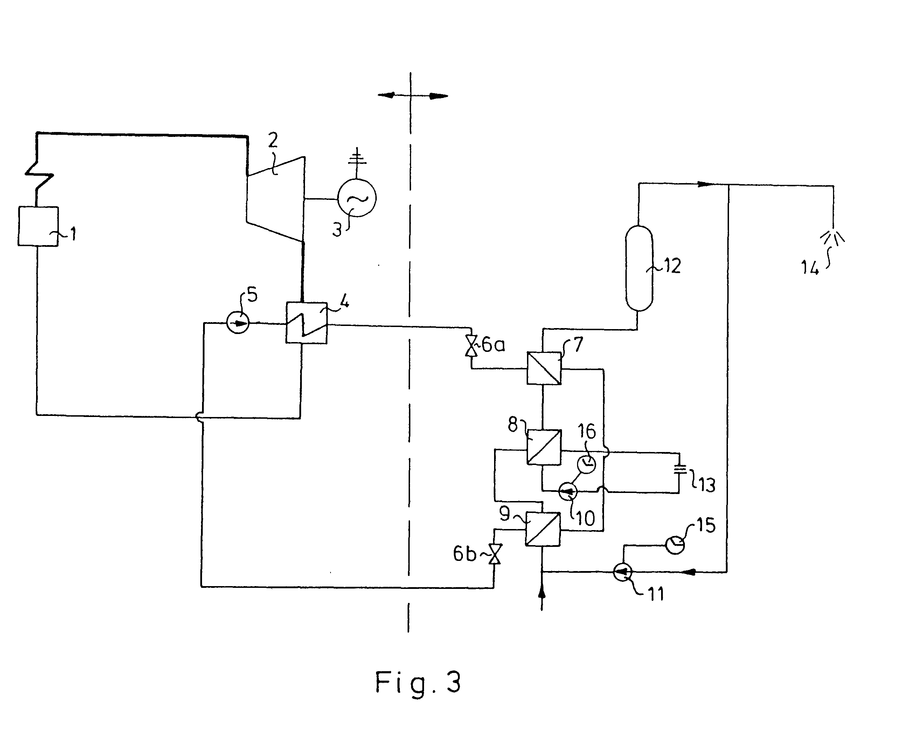

Fig. 3 zeigt die an sich bekannten Leitungsanordnungen von Kraftwerk und Wohnhäusern. Der Kessel 1 des Kraftwerkes leitet den erzeugten Dampf in die Dampfturbine 2, die den stromerzeugenden Generator 3 antreibt. Der Abdampf der Dampfturbine 2 gelangt durch einen Wärmetauscher, in dem das Speisewasser vorgewärmt wird, in den Kessel 1 zurück.

Der sekundärseitige Kreislauf des Wärmetauschers 4 bildet den primärseitigen Kreislauf der Speisewasserversorgung der Wohnhäuser. In diesem primären Kreislauf sind, wie es durch Fig. 3 veranschaulicht ist, die Speisepumpe 5 und zwischen den Ventilen 6a und 6b der Wohnhäuser, bzw. an dem Abschnitt zwischen diesen Ventilen, die das primärseitige Speisewasser übernehmenden Teile der Wärmetauscher 7, 8, 9 angeordnet. Der Ausgang des Warmwasserspeichers 12 ist einerseits mit den Warmwasserverbrauchern 14 und anderseits über die Kreislaufpumpe 11, die mit einem Schaltgerät 15 versehen ist, über die Sekundärseite der Wärmetauscher 9 und 7 mit dem Eingang des Warmwasserspeichers 12 verbunden.

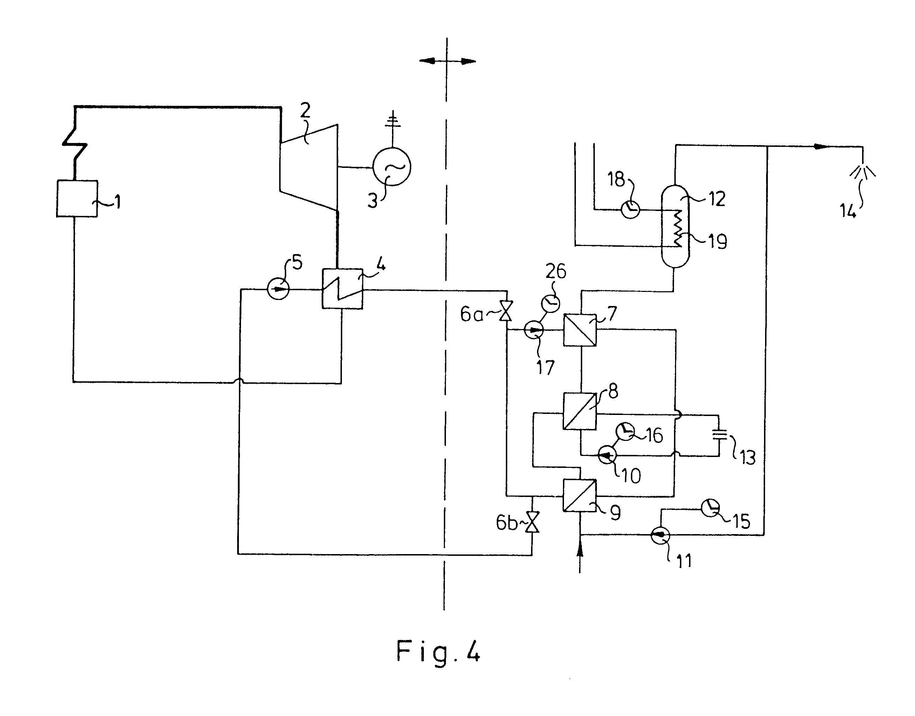

Die in Fig. 4 veranschaulichte Schaltungsanordnung zeigt ein Ausführungsbeispiel für die Schaltungsanordnung der Verbraucher-Wärmezentrale, die gegenüber der Schaltungsanordnung gemäss Fig. 3 in dem Sinne erweitert ist, dass in der Leitung der kraftwerkseitigen Einspeisung, d. h. in dem primärseitigen Wasserkreislauf des Wohnhauses, die Ventile 6a und 6b auch miteinander verbunden sind und dass zwischen dieser gemeinsamen Leitung und der primärseitigen Leitung des Wärmetauschers 7 eine mit einem Schaltgerät 26 versehene Pumpe 17 eingefügt ist. Die Schaltungsanordnung gemäss Fig. 4 ermöglicht eine Ausführungsform der Erfindung, gemäss der in dem Warmwasserspeicher 12 ein mit einem Schaltgerät 18 versehener elektrischer Heizkörper 19 angeordnet ist.

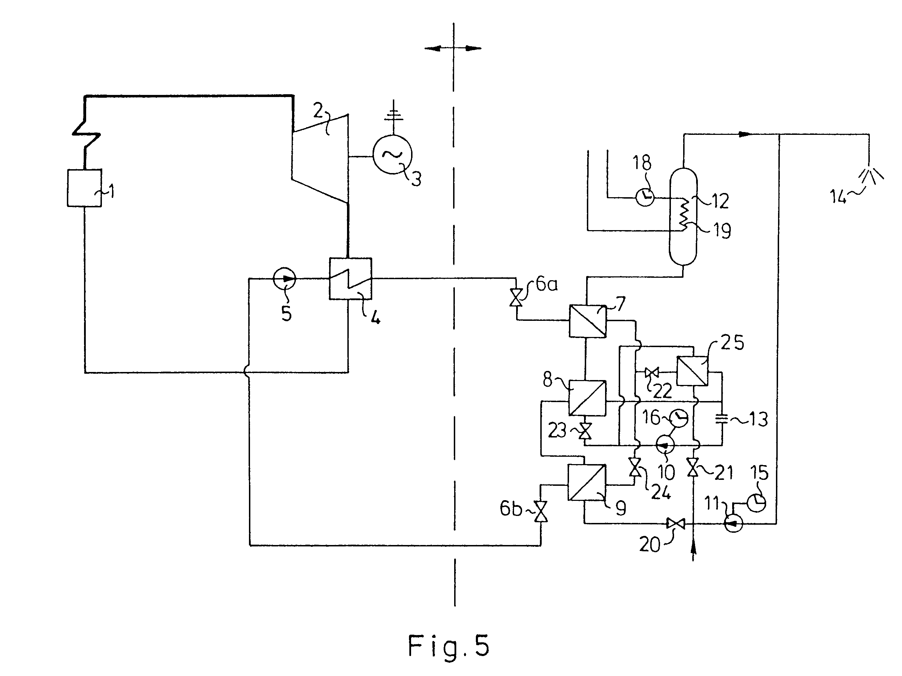

Fig. 5 zeigt eine weitere Ausführungsform der erfindungsgemässen Schaltungsanordnung. Diese Ausführungsform weicht von derjenigen gemäss Fig. 3 in den nachstehenden Merkmalen ab: In dem Warmwasserspeicher 12 ist ein schon anhand Fig. 4 gezeigter, mit dem Schaltgerät 18 versehener elektrischer Heizkörper 19 angeordnet. Im Nutzwarmwasserkreis ist zwischen der Kreislaufpumpe 11 und der Sekundärseite des Wärmetauschers 9 ein Ventil 20 eingefügt. An den Ausgang der Kreislaufpumpe 11 ist ein Ventil 21 angeschlossen, das über die Primärseite Kreislauf eines weiteren Wärmetauschers 25 und das Ventil 22 einerseits über die Sekundärseite des Wärmeaustauschers 7 an den Eingang des Warmwasserspeichers 12, und andererseits über ein Ventil 24 an die Sekundärseite des Wärmetauschers 9 angeschlossen ist. Die Sekundärseite des Wärmetauschers 25 ist mit ihrem Ausgang auch an den Wärmetauscher 8 angeschlossen mit dem Heizkörper 13, mit ihrem Eingang mit der Verbindungsleitung zwischen der Keislaufpumpe 10 und einem dem Wärmetauscher 8 vorgeschalteten Ventil 23 verbunden.

Das Verfahren gemäss der Erfindung wird nachstehend anhand der Figuren 3 – 5 erläutert:

Falls in den Nachtstunden die Heizung völlig abgestellt sein darf, wird das im Warmwasserspeicher 12 gespeicherte Warmwasser in voller Menge zur Deckung des Warmwasserbedarfs verwendet. Dies kann derweise erreicht werden, dass durch Abstellen der Speisepumpe 5 (siehe Fig. 3) der Kreislauf des primärseitigen Speisewassers stillgelegt wird und dass gleichzeitig die Kreislaufpumpen 10 und 11 mit Hilfe der Schaltgeräte 15 und 16 abgestellt werden, wodurch sowohl die Einspeisung von Warmwasser in den Warmwasserspeicher 12 als auch die Strömung im Heizungsverbraucherkreis eingestellt wird. Notwendiger Wasserdruck für die Warmwasserverbraucher 14 wird durch Einspeisung von kaltem Wasser in den Warmwasserspeicher 12 über die Wärmetauscher 9 und 7 sichergestellt.

Falls nach dem Abstellen der Speisepumpe 5, d. h. nach Abstellen der Warmwasserversorgung, nur eine geringe Beheizung erforderlich ist, so kann dies über einen Teil des Wärmeinhaltes des Warmwasserspeichers 12 mit Hilfe des Wärmetauschers 8 durchgeführt werden, damit die Wärme, die von den Heizkörpern abgestrahlt wird, ersetzt wird. Hierzu wird die Schaltungsanordnung nach Fig. 4 verwendet:

Mit dem Abstellen der Speisepumpe 5 werden im Wohnhaus die Ventile 6a, 6b ebenfalls geschlossen und die Pumpe 17 in dem inneren Wärmezirkulationskreis, in welchen die Wärmetauscher 7, 8, 9 mit ihrer Primärseite eingeschaltet sind, über das Schaltgerät 26 eingeschaltet, wodurch ein Teil des Wärmeinhaltes des Warmwasserspeichers 12 über die Wärmetauscher 7 und 9 in diesen Wasserzirkulationskreis gelangt, wonach diese Wärme mit Hilfe des Wärmetauschers 8 in den Heizungsverbrauchskreis mit den Heizkörpern 13 zwecks Lieferung der von diesem Heizkörper abgestrahlte Wärme übergeben wird. Das Ein- bzw. Abschalten der Pumpen 11, 10 und 17 sichern die Schaltgeräte 15, 16, bzw. 26, die zu diesen Pumpen 10, 11, 17 gehören. Diese Schaltgeräte können durch Handbetätigung und gegebenfalls durch Schaltuhren betätigt werden, aber am zweckmässigsten ist die Anwendung eines Fühlers im primärseitigen Wasserkreislauf, z.B. in Verbindung mit einem Schaltgerät, wobei der Fühler an ein Schaufelrad bzw. an dessen Achse angeschlossen ist und das Schaltgerät über einen Servomechanismus gesteuert wird.

Der Wasserströmungsfühler kann auch derweise ausgebildet sein, dass das Schaufelrad bzw. seine Achse einen Stromgenerator treibt, der, falls eine Wasserströmung vorhanden ist, gegen die Spannung einer Gleichspannungsquelle eine Spannung liefert, die die Wirkung dieser Gleichspannungsquelle ausgleicht. Falls keine Wasserströmung vorhanden ist, wird die Spannung dieser Gleichspannungsquelle wirksam und schaltet ein Relais ein, das sowohl die Pumpen als auch die Ventile des Wohnhauses einschaltet. Bei Anwendung des Verfahrens gemäss Fig. 4 wird vorausgesetzt, dass die Kreislaufpumpe 10 im Heizungsverbrauchskreis und die Kreislaufpumpe 11 im Nutzwarmwasserkreis kontinuierlich laufen.

Fig. 5 zeigt eine Schaltungsanordnung für die Realisierung eines Erfindungsgedankens, dessen Zielsetzung darin besteht, dass in den Nachtstunden, wenn das Heizkraftwerk die Fernwärmeversorgung eingestellt hat, ein Teil der Wärme des Warmwasserspeichers 12 in den Heizungsverbrauchskreis der Heizkörper 13 gelangt.

In den Nutzwarmwasserkreis ist ein zusätzlicher Wärmetauscher 25 eingebaut, der dazu beiträgt, dass Wärme aus dem Warmwasserspeicher 12 im fortlaufenden Betrieb der Kreislaufpumpe 11 in den sekundärseitigen Heizungsverbrauchskreis gelangt. Gemäss der Schaltungsanordung, veranschaulicht in Fig. 5, verlaufen die Strömungen im Nutzwarmwasserkreis folgendermassen:

Das Warmwasser aus dem Warmwasserspeicher 12 gelangt mit Hilfe der Kreislaufpumpe 11 durch das Ventil 21, das gleichzeitig mit dem Schliessen des Ventils 20 geöffnet wird, über den Wärmetauscher 25 und das geöffnete Ventil 22 und schliesslich über den Wärmetauscher 7 in den Warmwasserspeicher 12 zurück. Das Ventil 24 wird zum Sicherstellen des gewünschten Kreislaufes des Warmwassers gesperrt.

Das Wasser im sekundärseitigen Heizungsverbrauchskreis strömt durch den Wärmetauscher 25, die Heizkörper 13 und die laufende Kreislaufpumpe 10. Das Ventil 23 ist gesperrt.

Fig. 5 zeigt die Wirkungsweise sämtlicher Ventile im Wohnhaus, die entweder durch Handbetätigung oder durch einen Servomechanismus betrieben sind, wobei der letztere vorzugsweise mit einem Strömungsfühler nach Fig. 4 gesteuert wird.

In Fig. 5 ist ersichtlich, dass im Warmwasserspeicher 12, ähnlich wie es in Fig. 4 veranschaulicht wurde, auch ein elektrischer Heizkörper 19 verwendet wird, und zwar zur Erzeugung zusätzlicher Wärme, falls nötig. Diese Ausführungsform bietet nämlich den grossen Vorteil, dass der Warmwasserspeicher 12 in den Nachtstunden mit Hilfe von billigem Strom aufheizbar ist, wodurch die in den Kreislauf des Wohnhauses lieferbare Wärmemenge erhöht wird. Ein weiterer Vorteil dieser Ausführungform liegt darin, dass neben der Deckung des Heizungsbedarfs in kalten Jahreszeiten und der Möglichkeit des Aufrechterhaltens des Fernwärmebetriebes auch im Sommer ein verhältnismässig geringes, aber wichtiges Heizen ermöglicht wird.

## Patentansprüche

1. Verfahren zur Erhöhung des Wirkungsgrades eines mit Warmwasser aus einem Heizkraftwerk betriebenen Fernwärmesystems, bei welchem das Wärmespeichervermögen des Fernwärmesystems derart ausgenutzt wird, dass die Wärmezufuhr zu den Warmwasserspeicher (12) enthaltenden Verbraucher-Wärmezentralen unter Ausnutzung der in der Spitzenverbrauchsperiode der elektrischen Energieerzeugung in den Abendstunden gewinnbaren maximalen Wärmeleistung in unterschiedlichen Tageszeiträumen in unterschiedlichen Wärmestufen erfolgt, wobei die Summe der in den Tageszeiträumen zugeführten Wärmemengen gleich dem aufgrund der jeweiligen Aussentemperatur geschätzten täglichen Wärmebedarf ist, dadurch gekennzeichnet, dass die Warmwasserspeicher (12) während der Spitzenverbrauchsperiode auf die zulässige Maximaltemperatur aufgewärmt werden und dass bei einem geringen Wärmebedarf in den Nachtstunden, vorzugsweise zwischen 23.00 und 5.00 Uhr, die Warmwasserzufuhr in das Fernwärmesystem durch Stillsetzung der Hauptkreislaufpumpe (5) im Heizkraftwerk eingestellt wird und gleichzeitig die zur Nutzwarmwasserversorgung erforderliche Wärmemenge und/oder die von Heizkörpern (13) in den Heizungsverbrauchskreisen abgestrahlte Wärmemenge aus den aufgewärmten Warmwasserspeichern (12) gewonnen werden.

2. Verfahren nach Patentanspruch 1, dadurch gekennzeichnet, dass – falls in den Nachtstunden die Heizung abgestellt sein darf, jedoch eine kontinuierliche Nutzwarmwasserversorgung möglich sein soll – in den Verbraucher-Wärmezentralen sowohl die Keislaufpumpen (10) der Heizungsverbrauchspreise wie auch die Kreislaufpumpen (11) der Nutzwarmwasser-Versorgungskreise abgestellt werden, wobei der notwendige Wasserdruck für Warmwasserverbraucher durch Einspeisung von kaltem Wasser in eine Zuführleitung des Warmwasserspeichers (12) sichergestellt wird.

3. Verfahren nach Patentanspruch 1, dadurch gekennzeichnet, dass ein Anteil der in dem Warmwasserspeicher (12) gespeicherten Wärme über den eine erste Kreislaufpumpe (11) enthaltenden Nutzwarmwasserkreis und Wärmetauscher (7, 9), die in diesen und in einen eine zweite Kreislaufpumpe (17) enthaltenden, in der Verbraucher-Wärmezentrale vorgesehenen Wasserzirkulationskreis eingeschaltet sind, von dem Wasserzirkulationskreis übernommen wird und über einen anderen Wärmetauscher (8), der in den Wasserzirkulationskreis und in den Heizungsverbrauchskreis eingeschaltet ist, dem Heizungsverbrauchskreis übergeben wird, wobei sowohl mit der Kreislaufpumpe (11) des Nutzwarmwasserkreises als auch mit der Kreislaufpumpe (10) des Heizungsverbrauchskreises die Wasserzirkulation in diesen Kreisen aufrechterhalten wird (Fig. 4).

4. Verfahren nach Patentanspruch 1, dadurch gekennzeichnet, dass die Zirkulation des Warmwassers sowohl im Nutzwarmwasserkreis als auch im Heizungsverbrauchskreis von den zugehörigen Kreislaufpumpen (10, 11) aufrechterhalten wird und über einen zusätzlichen Wärmetauscher (25) ein unmittelbarer Wärmeaustausch zwischen diesen beiden Kreisen durchgeführt wird. (Fig. 5).

5. Verfahren nach einem der Patentansprüche 1 bis 4, dadurch gekennzeicnet, dass das Wasser des Warmwasserspeichers (12) über einen elektrischen Heizkörper (19), der in diesem Warmwasserspeicher (12) eingebaut ist, im Falle eines erhöhten Nachtheizungs- und/oder Nutzwarmwasserversorgungsbedarfs zusätzlich beheizt wird (Fig. 4 und 5).

6. Verfahren nach einem der Patentansprüche 1 bis 5, dadurch gekennzeichnet, dass die in der Verbraucher-Wärmezentrale befindlichen Ventile und Kreislaufpumpen von einer Schaltuhr oder von einem Schaltgerät gesteuert werden, die von einem im Primärkreis des Fernwärmesystems eingebauten Wasserströmungsfühler gesteuert werden.

7. Fernwärmesystem zur Verwirklichung des Verfahrens nach einem der Patentansprüche 1 bis 6, mit einem Heizkraftwerk, das mit einem Kessel (1), einer Dampfturbine (2) und einem primärseitig in den Abdampfkreis der Dampfturbine (2) eingeschalteten Wärmetauscher (4) ausgestattet ist, der sekundärseitig in einen Speisewasserkreis einer Verbraucher-Wärmezentrale eingeschaltet ist, wobei in den Speisewasserkreis eine Hauptkreislaufpumpe (5) und in dessen mit Hauptwärmetauschern (7, 8, 9) der Verbraucher-Wärmezentrale verbundenen Vorlaufleitung und Rücklaufleitung Ventile (6a, 6b) eingeschaltet sind, wobei ein Teil (7, 9) der Hauptwärmetauscher sekundärseitig in einen Nutzwarmwasserkreis, der einen Warmwasserspeicher (12) und eine Kreislaufpumpe (11) enthält, und ein anderer Teil (8) dieser Hauptwärmetauscher in einen Heizungsverbrauchskreis eingeschaltet sind, der ebenfalls eine Kreislaufpumpe (10) enthält, dadurch gekennzeichnet, dass sowohl die Kreislaufpumpe (11) des Nutzwarmwasserkreises als auch die Kreislaufpumpe (10) des Heizungsverbrauchskreises mit je einem Schaltgerät (15 bzw. 16) ausgerüstet sind, (Fig. 3 bis 5), wobei die Elemente des Nutzwarmwasserkreises und des Heizungsverbraucherkreises so ausgelegt sind, dass sie während der nächtlichen Stillegung der Fernwärmezufuhr die Nutzwarmwasserversorgung und Heizung gewährleisten.

8. Fernwärmesystem nach Patentanspruch 7, dadurch gekennzeichnet, dass die Ventile (6a, 6b) in der Vorlaufleitung und der Rücklaufleitung des Speisewasserkreises mit ihren mit denjenigen Hauptwärmetauschern (7, 9), die sekundärseitig in den Nutzwarmwasserkreis eingeschaltet sind, verbundenen Enden auch unmittelbar miteinander verbunden sind und dass zwischen dem Ventil (6a) der Vorlaufleitung und dem mit diesem verbundenen Hauptwärmetauscher (7), der an den Vorlauf des Warmwasserspeichers (12) angeschlossen ist, eine weitere Kreislaufpumpe (17), die mit einem Schaltgerät (26) versehen ist, eingeschaltet ist (Fig. 4).

9. Fernwärmesystem nach Patentanspruch 7, dadurch gekennzeichnet, dass zwischen dem Hauptwärmetauscher (8) im Heizungsverbrauchskreis der Verbraucher-Wärmezentrale und der Kreislaufpumpe (10) des Heizungsverbrauchskreises ein erstes Ventil (23) angeordnet ist und die Leitung zwischen der Kreislaufpumpe (10) des Heizungsverbrauchskreises und dem ersten Ventil (23) über die Primärseite eines weitern Wärmetauschers (25) an den Heizkörper (13) des Heizungsverbrauchskreises angeschlossen ist, wobei die Sekundärseite dieses weiteren Wärmetauschers (25) einerseits über ein zweites Ventil (22) an die Sekundärseite desjenigen Hauptwärmetauschers (7), der dem Warmwasserspeicher (12) vorgeschaltet ist, und andererseits über ein drittes Ventil (24) an die Sekundärseite desjenigen Hauptwärmetauschers (9) angeschlossen ist, an welchen die Rücklaufleitung des Speisewasserkreises angeschlossen ist, wobei die Sekundärseite dieses letzten Hauptwärmetauschers (9) andererseits über ein viertes Ventil (20) an den Ausgang der Kreislaufpumpe (11) des Nutzwarmwasserkreises angeschlossen ist.

10. Fernwärmesystem nach einem der Patentansprüche 7 bis 9, dadurch gekennzeichnet, dass der Warmwasserspeicher (12) mit einem elektrischen Heizkörper (19) versehen ist, der mit einem Schaltgerät (18) ausgerüstet ist.

11. Fernwärmesystem nach einem der Patentanspüche 7 bis 10, dadurch gekennzeichnet, dass die Ventile bzw. die Pumpen der Verbraucher-Wärmezentrale von an sich bekannten Zeitschaltuhr-Schaltorganen gesteuert sind.

12. Fernwärmesystem nach einem der Patentansprüche 7 bis 10, dadurch gekennzeichnet, dass die Schaltorgane der Ventile bzw. Kreislaufpumpen der Verbraucher-Wärmezentrale über einen Servomechanismus von einem an sich bekannten Wasserströmungsfühler, z.B. in Schaufelrad-Ausbildung, gesteuert werden.

## Claims

1. Method for improving the efficiency of a district heating system running on hot water produced by a heating power station, in which the heat storage capacity of the district heating system is used for supplying heat to the hot water storage unit (12) of a consumer's station, whereat the heat-supply per time-unit depends on the hour of the day, and the heat is accumulated throughout the whole day and corresponds with the daily heat demand, being predicted by the outdoor temperature while the highest possible heating efficiency during the peak generating of electrical energy is exploited in the evening, characterized in that the hot water storage unit (12) is heated up to the highest possible temperature during the peak generating, and that at night when the heat demand is low, especially from 23.00 to 5.00, the heat supply in the district heating system is suspended by switching off the main pump (5) of the power plant, and, at the same time, the amount of heat necessary for the supply of hot water and/or the amount of heat radiated by the radiameters in the heating circuit is taken from the pre-heated hot water storage unit (12).

2. Method as claimed in claim 1, characterized in that – in case the heater can be turned off during the nighttime, but it should be possible to supply warm water continuously – within the heat consuming units the pump 10 within the heating circuit as well as the pump (11) of the warm water circuit are turned off, whereat the pressure of the water being necessary for the heat consumer of warm water is guaranted by means of supplying cold water into the supply pipe of the water storage unit.

3. Method as claimed in claim 1, characterized in that a part of the heat stored in the hot water storage unit (12), is transferred by means of the hot water circuit through heat exchangers (7, 9) which are placed within the water circuit which furthermore includes a first pump (11) and a second pump (17) and is part of heat consuming device, the aforesaid part of the heat is transferred from this hot water circuit to a heating circuit through another heat exchanger (8) which is inserted in both, the water circuit and the heating circuit, whereat the water circulation is maintained by the pump (11) of the hot water circuit and by the pump (10) of the heating circuit in said circuits, respectively (see fig. 4).

4. Method as claimed in claim 1, characterized in that water circulation is maintained in the hot water circuit and in the heating circuit by pumps (10, 11), respectively which are included in these circuits, whereby a direct heat exchange between these two circuits through an additive heat exchanger (25) takes place.

5. Method as claimed in one of the claims 1 to 4, characterized in that the water of the hot water storage (12) can be additionally heated up in case of a high demand for night heating or for hot water by an electrical heater (19) being placed within this storage unit (12).

6. Method as claimed in one of the claims 1 to 5, characterized in that the valves and pumps within the consumer's station are controlled by a time switch or a time control unit which can be controlled by a flowmeter placed in the primary circuit of the district heating system.

7. District heating system for realising of the method as claimed in one of the claims 1 to 6, with heating a power station, comprising a boiler (1), a steam turbine (2) and a heat exchanger (4), placed in the primary side of the exhaust steam circuit of the steam turbine, whereat the heat exchanger is connected with the supply circuit of the consumer's station at the secondary side, whereat main pump (5) is placed within the supply circuit and the flow- and return pipes being connected with the main heat exchangers (7, 8, 9) of the consumer's station valves (6a, 6b) are provided, whereat one part (7, 9) of the main heat exchangers is placed at it's secondary side within a hot water circuit which includes a hot water storage unit (12) and a pump (11) another part (8) of these main exchangers is placed within a heating circuit, which also comprises a pump, characterized in that the pump (11) of the hot water circuit and the pump (10) of the heating circuit are both provided with a switching apparatus (15 or 16) (fig. 3 to 5), and the parts of the hot water circuit and of the heating circuit are placed in such a way that a sufficient amount of hot water and sufficient heating during the night suspension of heat supply is guaranteed.

8. District heating system as claimed in claim 7, characterized in that the valves (6a, 6b) within the flow- and return pipes ot the water supply circuit are directly connected to each other of their ends which are also connected to the main heat exchangers (7, 9), another pump (17), comprising a switching apparatus (26) is placed between the valve (6a) of the flow pipe and the main exchanger (7) which is connected with the flow pipe and also connected with the inlet of the hot water storage unit (12) (fig.4).

9. District heating system as claimed in claim 7, characterized in that a first valve (23) is placed between the main heat exchanger (8) of the heating circuit and the pump (10) of the circuit, the pipe between the pump (10) of the heating circuit and the first valve (23) is connected through the primary side of an additive heat exchanger (25) to the radiator (13) of the heating circuit, whereat the secondary side of this additive exchanger (25) being connected through a second valve (22) to the secondary side of that main exchanger (7) which is connected to the inlet of the hot water storage unit (12), and said secondary side is furthermore connected through a third valve (24) to the secondary side of the main exchanger (9) to which the return pipe of the supply circuit is connected, whereat the secondary side of this main exchanger (9) being connected through a fourth valve (20) to the outlet of the pump (11) of the hot water circuit.

10. District heating system as claimed in one of the claims 7 to 9, characterized in that the hot water storage unit (12) is provided with an electric heater (19), which is connected with a switching apparatus (18).

11. District heating system as claimed in one of the claims 7 to 10, characterized in that the valves of pumps of the consumer's station are controlby an already known clock-and-switching apparatus.

12. District heating system as claimed in one of the claims 7 to 10, characterized in that the switching device of the pumps or valves of the consumer's station are controlled by means of a servo control mechanism by an already known flowmeter, e. g. a paddle-wheel flowmeter.

**Revendications**

1. Procédé d'amélioration du rendement d'un système de chauffage à distance fonctionnant à l'eau chaude produite par une centrale thermique, utilisant la capacité de stockage thermique du système de chauffage à distance de telle sorte que l'apport de chaleur aux stations des utilisateurs, qui comprennent des accumulateurs d'eau chaude (12) a lieu à des niveaux de chaleur differents selon des périodes differentes du jour en mettant à profit la puissance calorifique maximale qu'il est possible de produire pendant les périodes de pointe d'utilisation de production d'énergie électrique se situant le soir, la somme des quantités de chaleur apportées pendant les periodes du jour étant égale au besoin en chaleur du jour prédit à partir de la température extérieure correspondante, caractérisé en ce que l'accumulateur d'eau chaude (12) est chauffé à l température maximale possible pendant la période de pointe d'utilisation, et que lorsque la demande de chaleur est faible pendant la nuit, de préférence de 23 heures à 05 heures, l'alimentation en eau chaude du système de chauffage à distance est interrompue par l'arrêt de la pompe principale (5) de la centrale thermique, et que simultanément la quantité de chaleur nécessaire à l'alimentations en eau chaude et/ou la quantité de chaleur rayonné par les radiateurs du circuit de chauffage sont fournies par les accumulateurs d'eau chaude (12) chauffés.

2. Procédé selon revendication 1, caractérisé en ce que – ou/cas où le chauffage peut être arrêté pendant la nuit, mais l'alimentation en eau chaude continue doit être possible – les pompes (10) des circuits de chauffage et les pompes (11) des circuits d'eau chaude sont arrêtées dans les stations des utilisateurs, la pression d'eau nécessaire pour les utilisateurs d'eau chaude étant assuré par l'apport d'eau froide dans un conduire alimentaire d'accumulateur d'eau chaude.

3. Procédé selon la revendication 1, caractérisé en ce qu'une partie de la chaleur stockée dans l'accumulateur d'eau chaude (12) est recue par le circuit d'eau chaude, qui contient une première pompe (11), et par les échangeurs (7, 9), qui sont intercalés dans ce circuit et dans un circuit de circulation d'eau prévu dans la station de l'utilisateur et comprenant une deuxième pompe (17), de ce circuit de circulation d'eau et est transmise au circuit de chauffage par un autre échangeur (8) qui est intercalé dans le circuit de circulation d'eau et le circuit de chauffage, la circulation d'eau étant maintenue dans les circuits correspondants soit par la pompe (11) du circuit d'eau chaude, soit par la pompe (10) du circuit chauffage (fig.4).

4. Procédé selon la revendication 1, caractérisé en ce que la circulation d'eau chaude est maintenue non seulement dans le circuit d'eau chaude, mais aussi dans le circuit de chauffage par les pompes (10, 11) leur appartenant et en ce qu'un échange direct de chaleur est réalisé entre ces deux circuits par un échangeur supplémentaire (25).

5. Procédé selon l'une des revendications 1 à 4, caractérisé en ce que l'eau de l'accumulateur d'eau chaude (12) est en plus chauffée par un corps de chauffé élécrique (19) installé dans cet accumulateur d'eau chaude, dans le cas où existe un besoin élevé de chauffage de nuit et/ou d'eau chaude (fig. 4 et 5).

6. Procédé selon l'une des revendications 1 à 5, caractérisé en ce que les valves et pompes de la station de l'utilisateur sont chacune actionées par une minuterie ou un dispositif de commande qui sont commandées par un débimètre placé dans le circuit primaire du système de chauffage à distance.

7. Système de chauffage à distance pour la réalisation du procédé selon l'une des revendications 1 à 6, comprenant une centrale thermique qui est équipée d'une chaudière (1), d'une tursine à vapeur (2) et d'un échangeur (4) intercalé du côté primaire dans le circuit d'échappement de la vapeur de la turbine (2) et du côté secondaire dans le circuit d'alimentation de la station de l'utilisateur, où sont intercalées dans le circuit d'alimentation une pompe principale (5) et dans les canalisations d'arrivée et de retour liées aux échangeurs principaux (7, 8, 9) des valves (6a, 6b), où une partie (7, 9) des échangeurs principaux est intercalée du côté secondaire dans un circuit d'eau chaude comprenant un accumulateur d'eau chaude (12) et une pompe (11), une autre partie (8) de ces échangeurs principaux étant intercalée dans un circuit de chauffage comprenant également une pompe (10), caractérisé en ce que la pompe (11) du circuit d'eau chaude ainsi que la pompe (10) du circuit de chauffage sont équipées chacune d'un dispositif de commande (respectivement 15 et 16) (figures 3 à 5) et en ce que les éléments du circuit de chauffage et du circuit d'eau chaude sont disposés de telle sorte que pendant l'arrêt nocturne d'alimentation en chaleur, l'approvisionnement en eau chaude et le chauffage sont assurés.

8. Système de chauffage à distance selon la revendication 7, caractérisé en ce que les valves (6a, 6b) des canalisations d'arrivée et de retour du circuit d'alimentation sont aussi reliées directement entre elles par leurs côtes reliés aux échangeurs principaux (7, 9), qui sont intercalés du second côté dans le circuit d'eau chaude, et qu'entre la valve (6a) de la canalisation d'arrivée et l'échangeur principal (7) qui lui est relié et qui est aussi lié à l'entrée de l'accumulateur d'eau chaude (12) est placée une pompe supplémentaire (17), munie d'un dispositif de commande (26) (fig. 4).

9. Système de chauffage à distance selon la revendication 7, caractérisé en ce qu'est placée entre l'échangeur principal (8) du circuit de chauffage de la station de l'utilisateur et la pompe (10) du circuit de chauffage une première valve (23), que la canalisation entre la pompe (10) du circuit de chauffage et la première valve (23) est reliée au radiateur (13) du circuit de chauffage en passant par le côté primaire d'un échangeur supplémentaire (25), le côté secondaire de cet échangeur supplémentaire (25) étant d'une part relié en passant par une deuxième valve (22) au côté secondaire de l'échangeur principal (7) qui est relié à l'accumulateur d'eau chaude (12) et d'autre part relié en passant par une troisième valve (24) au côté secondaire de l'échangeur principal (9) auquel est connecté la canalisation de retour du circuit d'alimentation, le côté secondaire de ce dernier échangeur principal (9), étant d'autre part relié à une quatrième valve (20) placée à la sortie de la pompe (11) du circuit d'eau chaude.

10. Système de chauffage à distance selon l'une des revendications 7 à 9, caractérisé en ce que l'accumulateur d'eau chaude (12) est muni d'un corps de chauffe éléctrique (19) équipé d'un dispositif de commande (18).

11. Système de chauffage à distance selon l'une des revendications 7 à 10, caractérisé en ce que les valves ou les pompes de la station de l'utilisateur sont actionnés par des minuteries-organes de commands déjà connus.

12. Système de chauffage à distance selon l'une des revendications 7 à 10, caractérisé en ce que les organes de commande des valves ou pompes de la station de l'utilisateur sont actionnés par l'intermédiaire d'un servo mechanisme par un débit mètre déjà connu, par exemple une débit mètre à palettes.

Fig.1

EP 0171014 B1

Fig.2

Fig. 3

EP 0171014 B1

Fig. 4

Fig.5